# EUROPEAN PATENT APPLICATION

(11) **EP 4 817 555 A1**
(43) Date of publication of application: **07.10.2026**
(21) Application number: 26170440.7
(22) Date of filing: 02.04.2026
(51) Int. Cl.: A61C 8/00

(54) **CONNECTION SYSTEM BETWEEN DENTAL IMPLANTS AND PROSTHETIC DEVICES**

(30) Priority: 03.04.2025 IT 202500007149
(71) Applicant: I.D.I. Evolution S.r.l., 20900 Monza (IT)
(72) Inventor: Piantoni, Andrea, 20900 Monza (MB) (IT); Minniti, Alessandro Gavino, 07100 Sassari (SS) (IT)
(74) Representative: Dragotti & Associati S.P.A.

(57) **Abstract**

A connection system for dental implants and prosthetic devices, wherein a dental implant comprises an endosseous screw (11) and a prosthetic device comprises at least one dental prosthesis (12) which can be arranged integral with said endosseous screw (11), in which system at least one extension (16, 216) is configured to be disposed at a free upper end of said endosseous screw (11), and said dental prosthesis (12) has a shaped cavity formed within the dental prosthesis (12) and comprises a free bottom edge (25). The at least one extension (16, 216) extends from a truncated conical portion (18), and the free bottom edge (25) of said dental prosthesis (25) is configured to be arranged directly on said truncated conical portion (18).

## Description

The present invention relates to a connection system for dental implants and prosthetic devices.

Digitalization in the sector of dental prosthetics has resulted in new production possibilities owing to the availability of machinable materials which reproduce the morphology and aesthetics of dental elements, in particular zirconia and disilicate in numerous combinations thereof.

The main properties which these materials possess are strength, dimensional stability and biocompatibility.

However, a relatively negative aspect is their rigidity which results in the need for a careful design of forms and thicknesses in order to prevent cracking or fracturing of the manufactured article.

Consequently, in order to be able to use them in restorative prostheses which are screwed onto the dental implants, the technique of bonding the aesthetic coating onto prefabricated metal bases is used. These metal bases reproduce the precise connection between implant and prosthesis, combining the characteristics of stress resistance typical of metals, including small thickness metals, with the aesthetics and stability of ceramic materials.

The requirements which these bonding bases must satisfy include without doubt a retaining capability, in order to ensure stable fixing of the bonding material, and anti-rotational properties in order to ensure precise positioning of the milled aesthetic coating. In addition to these requirements a shoulder of at least 0.5 mm must be provided in order to provide support for the ceramic material (zirconium) which resists the vertical chewing stresses.

This shoulder, in order to simplify manufacture, is generally made on the base (bottom) of the device, i.e. on the part which is usually joined together with the implant device and which is situated at the interface between the bone and the free gingival margin.

There exist bonding bases which do not have this support shoulder, but which have a conical shape and which rely on the adhesion and bonding materials to perform the task of dissipating the chewing stresses, thus exposing the coating material to the risk of fractures due to the so-called "wedge effect".

These implant devices are based on two main prosthetic techniques relating to the preparation (reduction in size) of the natural dental elements in order to accommodate prosthetic restorations defined as "horizontal preparations", i.e. the formation of dental abutments with a shoulder, and "vertical (or feather-edge) preparations" which reduce the size of the tooth to abutments having a conical shape, but without supporting or closing shoulders.

The essential difference between the two techniques is that, in the horizontal preparations, the shoulder defines the limit of the prosthetic restoration, while in the vertical preparations this limit is not physically defined, but may be arbitrarily chosen by the medical specialist and by the dental technician during the construction of the prosthetic article.

Both techniques, therefore, have positive and negative elements: the "shoulder" constitutes a support but at the same time a limitation, the feather-edge preparation allows the clinician to decide, even after preparation, the limit between the metal and the aesthetic coating, but exposes the more fragile materials to the risk of fractures owing to the reduction in the support surfaces.

The general object of the present invention is therefore to provide a connection system for dental implants and prosthetic devices which is able to overcome the aforementioned drawbacks of the prior art in an extremely simple, low-cost and particularly functional manner.

Another object of the present invention is to provide a connection system for dental implants and prosthetic devices which allows the possibility of choosing the correct positioning of the prosthetic device even in the presence of materials which have a limited strength and in certain respects are fragile. More particularly, an object of the invention is to provide a connection system for dental implants and prosthetic devices which overcomes the rigid distinction between horizontal prosthetic preparations with a fixed shoulder and vertical preparations, allowing a clinician or a dental technician to freely determine the closing height of the prosthesis in relation to the gingival margin of the patient.

Another object of the present invention is to provide a connection system for dental implants and prosthetic devices which has versatility characteristics as regards joining together of the implant itself and the associated overstructure.

The aforementioned objects are achieved by a connection system for dental implants and prosthetic devices realized in accordance with the independent claim 1 and the subclaims which follow.

With this innovative solution of the present invention it is possible to cover both types of prior prosthetic solutions mentioned above, combining them in a single device which is strong and not subject to breakages due to mastication.

Furthermore, as will be seen, the solution according to the present invention offers various advantages such as a reduction in the costs and the advantage of allowing arrangement in the correct position, depending on the specific case, by the technician performing application of the device.

The structural and functional characteristics of the present invention and its advantages compared to the prior art will emerge even more clearly from a reading of the following description, with reference to the attached schematic drawings, which show an example of embodiment of the said invention. In the drawings:
- Figure 1 shows a side elevation view of an endosseous screw provided with the arrangements of parts of a connection according to the present invention;
- Figures 2 shows an elevation view of the upper end portion only of the endosseous screw shown in Figure 1, Figure 2A shows the same elevation view rotated through 30 degrees and Figure 2B shows a top plan view of the same upper end portion of the endosseous screw;
- Figures 3 to 5 show cross-sectional views of three different positions of an abutment shown in Figure 3A on top of the upper end portion of the endosseous screw of a system according to the present invention shown in Figure 1;
- Figures 6 and 7 show cross-sectional views of the positions of different embodiments of the upper end portion of the endosseous screw again in a system according to the present invention.

In order to facilitate understanding, identical reference numbers have been used, where possible, to identify identical common elements in the figures. It is understood that elements or characteristics of one embodiment may be conveniently incorporated in other embodiments without further clarifications.

Each example is provided merely by way of illustration of the invention and is understood as not being a limitation thereof. For example, the technical characteristics shown or described since they form part of one embodiment may be integrated within, or associated with, other embodiments in order to produce a further embodiment. It is understood that the present invention will be inclusive of these modifications and variants.

It is understood that elements and characteristics of one embodiment may be conveniently incorporated in other embodiments without further clarifications.

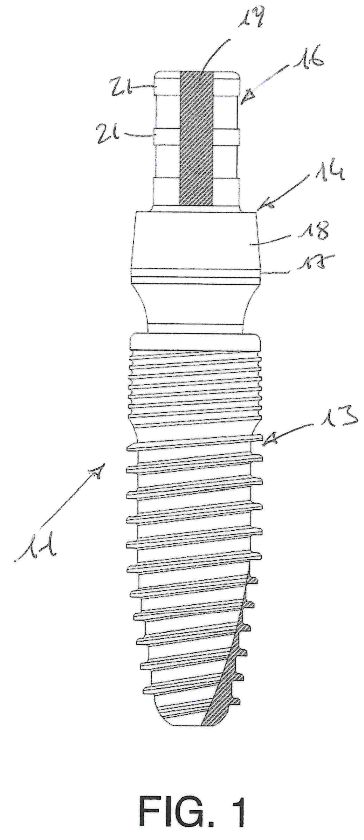

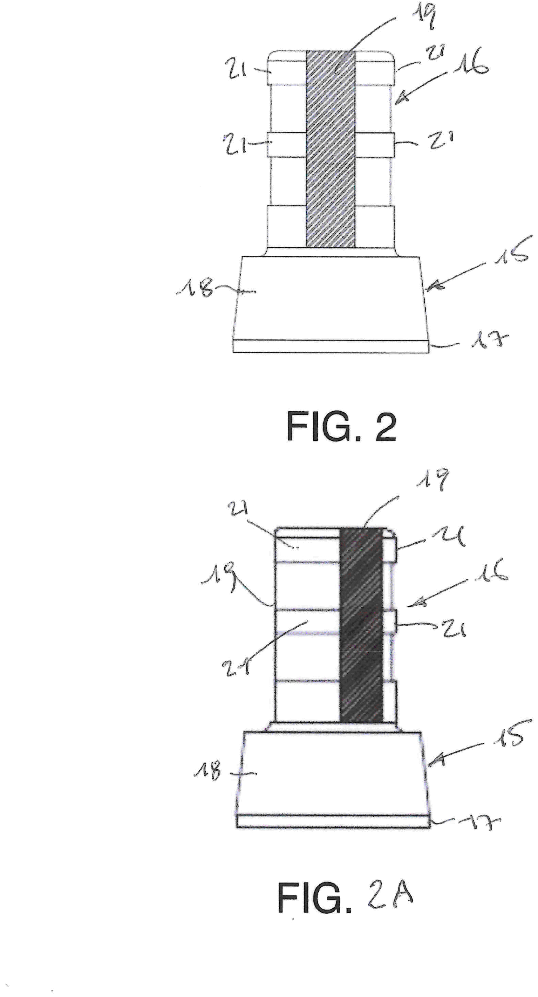

With reference to Figures 1 to 5, which are non-limiting examples, a first embodiment of a connection system for dental implants and prosthetic devices realized in accordance with the invention is shown.

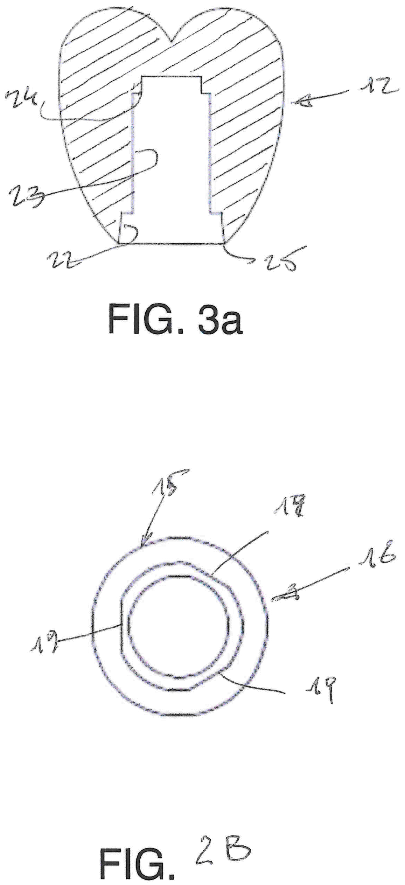

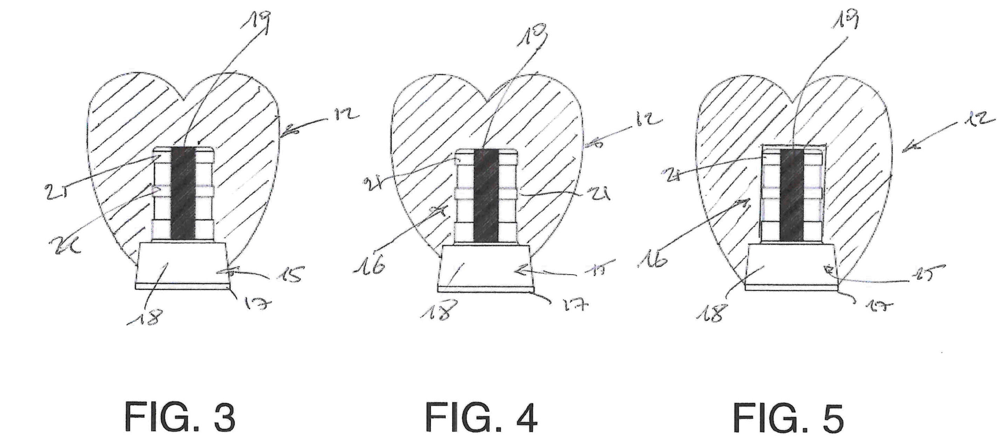

In particular, it must be first stated that a dental implant is a fixed prosthetic device, used to cover the space left free by one or more missing or extracted teeth. The main parts which form the dental implant are essentially an endosseous screw, denoted overall by 11 in Figure 1, and a dental prosthesis 12 - schematically shown in Figure 3A - which is positioned and connected on top of the endosseous screw 11.

The endosseous screw 11 consists of a threaded helical portion 13 which is arranged in the bone and is associated with a top portion 14, generally referred to as an "abutment". This top portion 14 may be identified as being the component of a dental implant which is detached from and emerges from the gum and which is configured to support the overstructure which reproduces with an article the dental prosthesis 12, which replaces the natural tooth, for example the crown of a single element. According to other embodiments, the endosseous screw 11 and the abutment 14 are different elements, namely are separately made, and selectively associated together, preferably connected by means of cementation or screwing. According to further embodiments, the endosseous screw 11 and the abutment 14 are connected together by means of an intermediate structure.

The idea according to the present invention is to make such a connection system with a particular arrangement of the top portion, namely the abutment 14, and particular shaped recesses formed inside the dental prosthesis 12.

Consequently, the connection system comprises at least one extension 16 of the top portion 14, namely of the abutment, which is inserted inside a shaped cavity formed inside the dental prosthesis 12.

For example, in the embodiment shown in Figures 1-5, said top portion 14 has a particular form. It can be noted, in fact, that said top portion 14 comprises a base or shoulder 15 from which an actual extension 16 extends.

More particularly, the base or shoulder 15 comprises a truncated conical portion 18 supporting the extension 16. Said truncated conical portion 18 is configured to provide a continuous support surface for a free bottom edge 25 of the dental prosthesis 12, thus allowing said dental prosthesis 12 to be arranged at a variable vertical height, forming a feather-edge prosthetic closure which can be personalized depending on the clinical requirements and the profile of the soft tissues of a patient. Preferably, the top portion 14 also comprises a thin cylindrical plate 17 which is located above the helical threaded portion 13 of the screw 13 and from which the base or shoulder 15 extends.

The example shows a single extension 16 with an essentially cylindrical form, which has lateral facets 19 arranged at 120 degrees with respect to each other on the side surface of the extension. Said extension 16 also has on the side surface several outwardly extending ribs 21 extending at intervals between one facet 19 and another transversely with respect to the axis of the cylindrical side surface.

According to embodiments, the shaped cavity formed within the dental prosthesis 12 ends with an undercut 24 which may defined an end-of-travel stop for the extension 16, defining a maximum limit for insertion of said extension 16 inside the shaped cavity.

It should be pointed out that the shaped cavity formed within the dental prosthesis 12 has a cross-sectional form complementing that of the extension 16. In this way the facets 19 engage inside said cavity defining an anti-rotational cross-section which ensures the stability of the joint, with no rotation of the parts.

Moreover, more particularly, the shaped cavity formed within the dental prosthesis 12 comprises bored sections with different diameters. The example in Figure 3A shows a first section with larger widened diameter 22, followed by a second section 23 with a smaller diameter which may end, in certain embodiments, with the said undercut 24 defining a stop for the extension 16.

Figures 3, 4 and 5 show how it is possible to position, depending on the specific need, the dental prosthesis 12 with respect to the extension 16 of the top portion 14 of the endosseous screw 11. More specifically, these figures show a particularly advantageous technical feature of the invention. The truncated conical portion 18 of the abutment 14 offers a plurality of possible sections on which the dental prosthesis 12may be arranged, each selectively determined by a different internal diameter of the free bottom edge 25 of the dental prosthesis. This provides the possibility, during design of the dental prosthesis 12, of choosing a desired closing height and consequently forming the free bottom edge 25 of the prosthesis with an internal diameter corresponding to that of the section of the truncated conical portion 18 corresponding to said chosen height. This makes it possible to obtain a feather-edge closure which is optimal and personalized in relation to the patient's gum, using a single standard abutment model for different clinical situations.

For example, Figure 4 shows how the dental prosthesis 12 is located on top of the extension 16 and a free bottom edge 25 of the said dental prosthesis 12 is arranged on the upper section of the truncated conical portion 18 of the top portion 14 from which the said extension 16 departs.

Figure 3 also shows how the dental prosthesis 12 is located on top of the extension 16, but in this case the free bottom edge 25 of the said dental prosthesis is arranged on a central section of the truncated conical portion 18 of the top portion 14 from which the said extension 16 departs.

Finally, Figure 5 shows how the dental prosthesis 12 is located on top of the extension 16 and a free bottom edge 25 of the said dental prosthesis 12 is arranged on the lower section of the truncated conical portion 18 of the top portion 14 from which the said extension 16 departs.

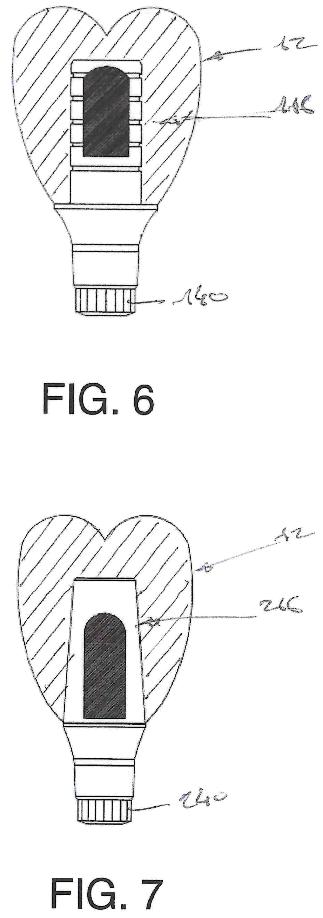

In a further embodiment shown in Figure 6, the extension has a partially hollow cylinder shape 118 departing directly from a conical shaped portion externally shaped in the form of anti-rotation section or profile 140 which is inserted in the facing end section of the helical threaded portion 13 of the endosseous screw 11.

In a further embodiment shown in Figure 7, the extension has a partially hollow truncate cone shape 216 also departing directly from a conical shaped portion externally shaped in the form of anti-rotation section or profile 240 which is inserted in the facing end section of the helical threaded portion 13 of the endosseous screw 11.

Advantageously, therefore, this invention is able to solve the problem of correct positioning of the parts, it being possible to choose the location of the prosthetic device, as a result of the continuous support surface of the truncated conical portion 18, with respect to both the free gingival margin and the bone of the patient. This being possible even in the presence of materials which are not very strong and in certain respects fragile.

The system according to the present invention in certain respects and at least partly combines the characteristic features of both the techniques known hitherto as described in the introductory part of the present application by inserting a shoulder in an intermediate zone of the device itself and allowing freedom to choose the margin between the aesthetic component and the metal in the most apical portion of the crown.

Owing to its geometry, this system may be regarded as being the first system with an abutment for a screwed prosthesis in which the intramucosal closure height may be chosen without varying the height of the abutment itself.

The object mentioned in the preamble of the description is thus achieved.

The scope of protection of the present invention is defined by the attached claims.

## Claims

1. Connection system for dental implants and prosthetic devices, wherein the connection system comprises a dental implant having an endosseous screw (11) and a prosthetic device having at least one dental prosthesis (12) which can be arranged integral with said endosseous screw (11), in which system:
- at least one extension (16, 216) is configured to be disposed at a free upper end of said endosseous screw (11), and
- said dental prosthesis (12) has a shaped cavity formed within the dental prosthesis (12), said dental prosthesis (12) comprising a free bottom edge (25),
- said at least one extension (16, 216) extends from a truncated conical portion (18), and
- said free bottom edge (25) of said dental prosthesis (12) is configured to be arranged directly on said truncated conical portion (18).

2. Connection system according to claim 1, **characterized in that** said at least one extension has on a side surface thereof at least one facet (19) defining a cross-section complementing an internal cross-section of the shaped cavity formed within the dental prosthesis (12).

3. Connection system according to claim 2, **characterized in that** three facets (19) are arranged at 120° with respect to each other in a direction parallel to the axis of the extension (16).

4. Connection system according to claim 3, **characterized in that** multiple outwardly projecting ribs (21) extending at intervals between one facet (19) and another transversely with respect to the axis of the extension (16) are also provided on the side surface.

5. Connection system according to any one of the preceding claims, **characterized in that** said shaped cavity formed within the dental prosthesis (12) comprises bored sections (22, 23) with different diameters.

6. Connection system according to any one of the preceding claims, **characterized in that** said shaped cavity formed within the dental prosthesis (12) ends with an undercut (24) defining a stop for said at least one extension (16, 216).

7. Connection system according to claim 6, **characterized in that** said shaped cavity formed within the dental prosthesis (12) comprises a first section with a larger widened diameter (22), followed by a second section (23) with a smaller diameter ending with said undercut (24) defining a stop for said extension (16).

8. Connection system according to claim 1, **characterized in that** said at least one extension (16, 116, 216) has a partially hollow cylinder shape (116) departing directly from a conical shaped portion of said endosseous screw (11).

9. Connection system according to claim 1, **characterized in that** said at least one extension (16, 116, 216) has a partially hollow truncated conical shape (216) also departing directly from a conical shaped portion (18) of said endosseous screw (11).
